# EUROPEAN PATENT SPECIFICATION

(11) **EP 4 021 172 B1**
(45) Date of publication and mention of the grant of the patent: **04.12.2024**
(21) Application number: 20858602.4
(22) Date of filing: 31.08.2020
(51) Int. Cl.: A01K 5/02, A01K 1/03, A01K 1/035

(54) **HOME CAGE PROGRAMMABLE ACCESS CONTROL DEVICE**
PROGRAMMIERBARE ZUGANGSKONTROLLVORRICHTUNG FÜR KÄFIGE
DISPOSITIF DE COMMANDE D'ACCÈS PROGRAMMABLE POUR CAGES

(30) Priority: 29.08.2019 US 201962893446 P
(43) Date of publication of application: 06.07.2022
(73) Proprietor: University of Central Florida Research Foundation, Inc., Orlando, FL 32826 (US)
(72) Inventor: SOUTHWELL, Amber, Orlando, FL 32816 (US); HART, Casey, Orlando, FL 32816 (US)
(74) Representative: Laine IP Oy
(86) International application number: PCT/US2020/048751
(87) International publication number: WO 2021/042036

(56) References cited:
- WO-A1-2015/189454
- CN-A- 107 114 253
- JP-U- 3 220 444
- US-A1- 2004 194 714
- US-A1- 2012 160 176
- US-A1- 2013 013 104
- US-A1- 2014 033 990
- US-A1- 2019 014 742
- US-A1- 2019 110 448

## Description

### FIELD OF THE INVENTION

The invention relates to a networkable programmable access control device configured to fit entirely within an existing home cage and to control access according to an operator-defined schedule.

### BACKGROUND OF THE INVENTION

As research grows, metabolic components to non-strictly metabolic diseases are being discovered. Research laboratories need a low-cost, high-throughput method to regulate an animal's metabolism.

Currently available technology is expensive and superfluous, making these options low-throughput for prospective interdisciplinary metabolic studies. Currently available automated food access methods for animals typically fall within three categories: metabolic, specially modified, or operant behavior cages.

Metabolic cages control numerous aspects of a single-housed animal's environment, including water, food, and exercise access, while simultaneously recording multiple data points. However, if automated food access is the only feature that is needed, then the metabolic cages are an expensive and superfluous alternative. This problem is compounded as the population size and duration of a study increases, requiring the use of more cages. Due to cost, animals (e.g. mice) are not typically raised in a metabolic cage, and thus, moving an animal from its home cage to a metabolic cage may induce anxiety and behavioral changes, risking the introduction of confounding variables. Metabolic cages are also bulky and usually not compatible with a vivarium's existing cage rack. Examples of metabolic cages include CLAMS from Columbus Instruments and the TSE Systems PhenoMaster.

Specially modified cages typically take an animal's current home cage and cut a hole in it to allow an external automated food access device. This prevents the need to transfer an animal to a different cage. However, modified cages expose the home cage to the outside environment, preventing recirculation of clean air into the home cage. This makes animals susceptible to potential airborne contagions, as well as researcher borne scents and confounding molecules within the vivarium. Additionally, since these cage modifications are external, a vivarium's existing cage rack would no longer be able to house the modified cage. Examples of specially modified cages are the Research Diet BioDAQ Gated and TSE Systems FeedTime.

Operant behavior cages can also provide automated food access but require conditioning the animals to perform a specific behavior before receiving a food reward, which introduces unnecessary confounding variables. These cages can be modified to instead dispense food during specific time intervals. However, the food is dispensed as reward pellets rather than standard chow and in pre-determined quantities, making it not an ideal solution when studies require unlimited food access during feeding times. Additionally, the animals have access to any excess food dispensed into the cage, defeating the purpose of having specific feeding time intervals. An example of an operant behavior cage includes the Noldus PhenoTyper.

WO2015/189454 discloses automated feed dispensers for animal cages. An automatic dispenser is designed such that a feed container and a closure surface can be moved relative to one another, such that in a closed position, the closure surface covers the access opening and blocks access to the inside of the container, and in the open position, the inside of the container can be accessed. In one embodiment, a system of automatic food dispensers comprises a group of automatic dispensers coupled to respective cages, each automatic dispenser configured for communication by Radio frequency signals with a central control unit. The central control unit is programmed to automatically manage the plurality of automatic dispensers.

Consequently, there is room in the art for improvement.

### SUMMARY

An aspect of the invention is presented in the independent claim 1. Further embodiments are presented in the dependent claims.

In a server controller side, an apparatus comprises at least one access control device, comprising: a controller configured to deliver access signals according to an access schedule based on data entered into the controller by an operator; and a movable barrier configured to be positioned in a home cage between a storage area and a living area and configured to be movable between an access position where there is unrestricted access to an item in the food storage area from the living area and a restricted position where the access is denied. The movable barrier is moved between the access position and the restricted position in response to the access signals. The movable barrier is configured to fit entirely within the home cage and a lid of the home cage without making any modifications to the home cage or the lid. In an embodiment, the movable barrier is configured to hang from a pre-existing food hopper configured for the home cage.

According to the invention, at least one food access control device comprises two access control devices. In a server access control device of the two access control devices the controller comprises a server controller. In a client access control device of the two access control devices the controller comprises a client controller in signal communication with the server controller. In the server controller the access schedule is based on the data entered into the server controller by the operator. In the client controller the access schedule is based on the data entered into the server controller.

### BRIEF DESCRIPTION OF THE DRAWINGS

The invention is explained in the following description in view of the drawings that show:
FIG. 1 is a schematic diagram of a server food access control device.
FIG. 2 is a schematic diagram of a client food access control device.
FIG. 3 is a schematic diagram of an alternate example embodiment of a server food access control device.
FIG. 4 shows a perspective view of an example embodiment of the food access control device.
FIG. 5 shows a perspective view of controls of the food access control device of Fig. 4.
FIG. 6 is a perspective view of the food access control device of Fig. 4 with a movable barrier in an access position.
FIG. 7 is a perspective view of the food access control device of Fig. 4 with the movable barrier in a restricted position.
FIG. 8 is an exploded view of the food access control device of Fig. 4.
FIG. 9 is a perspective view of an example embodiment of the movable barrier.
FIG. 10 is a side view of the food access control device of Fig. 4 secured to a food hopper of a cage.
FIG. 11 is a perspective view of the food access control device of Fig. 4 secured to a food hopper of a cage.
FIG. 12 is a front view of the food access control device of Fig. 4 secured to a food hopper and in the cage.

### DETAILED DESCRIPTION OF THE INVENTION

The Inventors have developed a novel and innovative access control device capable of automatically controlling access to single-housed or group-housed animals based on an operator-designated schedule. The access control device can control access to food, or, in embodiments not forming part of the claimed invention, to water, to an object, to a region within a cage, and/or may immobilize (restrict access to) /release (permit access to) a device (e.g. exercise wheel). The embodiment disclosed herein controls access to food, but the disclosure is not limited to this embodiment.

Designed as an alternative to expensive metabolic home cages, a food access control device is used in the animal's home cage, reducing potential confounding variables. To avoid taking up additional space in the home cage, this food access control device may operate within or suspend from an empty food hopper and does not interfere with the existing home cage lid or rack. One food access control device is needed per home cage and any number of home cages can be set up using this low-cost, high-throughput system.

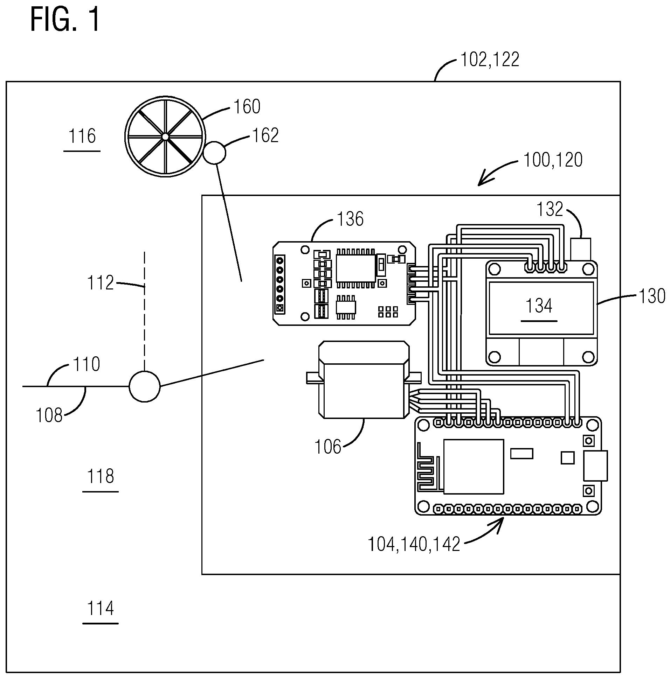

As can be seen in Fig. 1, the food access control device 100 restricts and restores food access on a timer in an animal's home cage 102. Each home cage 102 has its own food access control device 100, which consists of one controller 104, one positioning mechanism 106, and one movable barrier 108. In this embodiment, the movable barrier 108 is a barrier to a region within the home cage 102 in which the food is disposed. As noted above, the movable barrier 108 may alternatively be a barrier to water, to an object (e.g. exercise wheel), to a region within a cage, and/or may immobilize/release a device.

In an embodiment, the controller 104 is an open source controller capable of wireless local area networking using an Internet-of-Things platform. An example controller is a NodeMCU. The NodeMCU is a WiFi-capable microcontroller that can be programmed using C/C++ and is powered using a single micro USB cable. The NodeMCU is capable of controlling the positioning mechanism 106. In an embodiment, the positioning mechanism 106 is a servomotor or a stepper motor, which is a small motor capable of moving the movable barrier 108 back and forth between a restricted position 110 and an access position 112. In an embodiment, the servomotor/stepper motor rotates the movable barrier 108. In an embodiment, the rotation is 180 degrees.

The food access control device 100 is configured to fit entirely within the home cage 102. In an embodiment, the food access control device 100 fits between living area 114 and a food storage area 116. In an embodiment, the food access control device 100 fits within or is suspended from a hopper 118 of the home cage 102. In an embodiment, the food access control device 100 fits entirely within the home cage 102 and a lid when the home cage 102 and the lid form a seal configured to keep out unfiltered, environmental air.

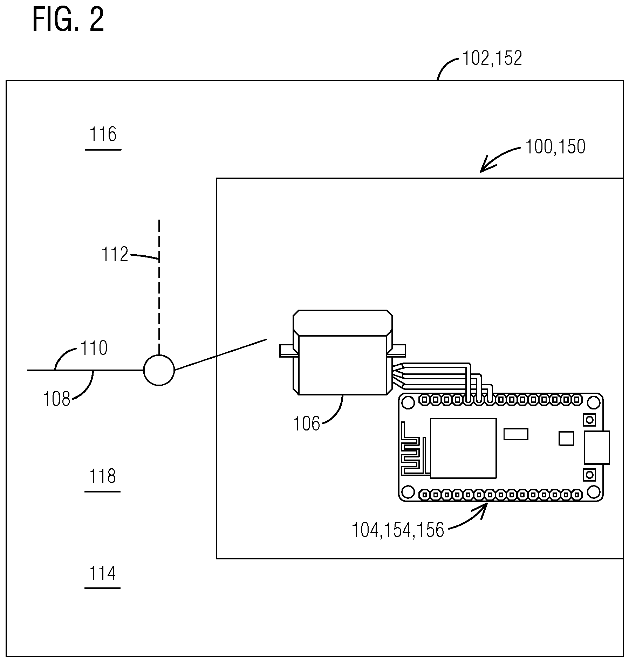

When using only one server food access control device 120, which is not according to the invention, the food access control device 100 is designated a server food access control device 120. Fig. 1 shows the server food access control device 120. The associated home cage 102 will be designated as the server home cage 122. When using multiple food access control devices 100, one food access control device 100 is a server food access control device 120 and subsequent/associated food access control devices 100 are designated client food access control devices 150. Fig. 2 shows the client food access control device 150. The associated home cages 102 will be designated as client home cages 152.

As shown in Fig. 1, the server food access control device 120 has an input device 130 through which the operator can input data into the controller 104 to be used for the schedule. In the server food access control device 120 the schedule is designated the server schedule. The server schedule that is based on the data input by the operator may take any form known to the Artisan. For example, the schedule may include a calendar and clock with times when the movable barrier 108 is to be moved to the restricted position 110 and times when the movable barrier 108 is to be moved to the access position 112. Alternately, the schedule may take the form of a timer that sets a period between when the movable barrier 108 is to be moved to the restricted position 110 and times when the movable barrier 108 is to be moved to the access position 112. The food access schedule can be adjusted by an operator at any time.

In an embodiment, the input device 130 includes a keypad 132 and a display 134. In an embodiment, the display 134 is a small OLED display with a keypad 132 that permits quick and easy adjustments to the server schedule. Alternately, or in addition to the input device 130, the data may be input into the server food access control device 120 wirelessly using a WiFi-capable device such as a smart phone or the like. Neither method requires an internet connection.

In an alternate embodiment, (shown superimposed on FIG. 1), an exercise wheel 160 is disposed in the home cage 102. The positioning mechanism 106 is connected to a brake 162 that interacts with (e.g. immobilizes/releases) the exercise wheel 160. When the positioning mechanism 106 positions the brake 162 in an unbraked position with respect to the exercise wheel 160, the exercise wheel 160 is free to rotate. When the positioning mechanism 106 positions the brake 162 in a braked position with respect to the exercise wheel 160, the exercise wheel 160 is not free to rotate. Controlling whether the exercise wheel 160 is free to rotate aids in controlling an amount of exercise and associated caloric output. The exercise wheel 160 and the brake 162 can be provided in addition to the movable barrier 108.

Alternately, there may be two positioning mechanisms 106, one for the movable barrier 108 and another for the brake 162. When there are two positioning mechanisms 106, each may be independently controlled by the controller 104. The brake 162 and the associated positioning mechanism 106 constitute an exercise wheel control device. There may be a respective exercise wheel control device in the server home cage 122 and/or in any or all of the client home cages 152. The control logic for the brake(s) 162 may be the same as disclosed herein for the movable barrier(s) 108. Alternately, the controller logic may be different.

In other alternate embodiments, the positioning mechanism 106 operates to control access to water, to an object, and/or to a region in the cage.

In an embodiment, the server food access control device 120 includes a real-time clock module 136 that keeps accurate time. The real-time clock module 136 includes a small battery that maintains accurate time during a loss of external power. In the server food access control device 120, the controller 104 is designated a server controller 140. The server controller 140 includes a server controller time clock 142. Should the power supply be interrupted, the battery on the real-time clock module 136 will maintain the server controller time clock 142 and the server schedule. Once the power supply is restored, the client food access control devices 150 will communicate with the server controller 140 and synchronize their time and their schedule with the server controller time clock 142 and the server schedule.

Fig. 2 shows the client food access control device 150. At a minimum, the client food access control device 150 includes the controller 104, designated a client controller 154, the positioning mechanism 106, and the movable barrier 108. The client controller 154 is in signal communication with the server controller 140. The client controller 154 has its own schedule designated the client schedule. In the client controller 154 the client schedule is based on the data entered into the server controller 140. The data entered into the server controller 140 may be transmitted to the client controller 154. Alternately, a copy of the server schedule may be transmitted to the client controller 154 to be used as the client schedule. The client controller 154 includes a client controller time clock 156. The client schedule in the client controller 154 is kept synchronized with the server schedule in the server controller 140.

A food access control apparatus includes a server food access control device 120 and any number of client food access control devices 150.

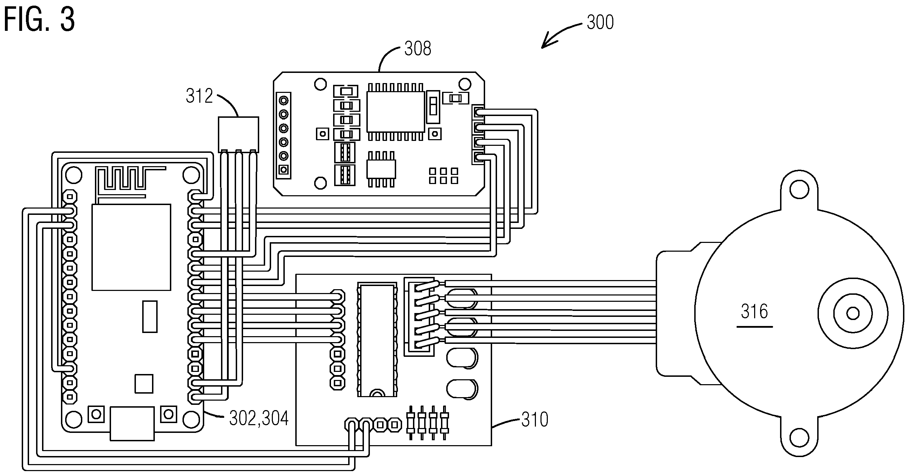

FIG. 3 shows an alternate example embodiment of the server food access control device 300 having a server controller 302 with a server controller time clock 304, a real time clock module 308, a stepper motor board 310, a Hall effect sensor 312, and a positioning mechanism 316 which can be a stepper motor. If the positioning mechanism 316 is a stepper motor, then a stepper motor board 310 may be required to help control the stepper motor. The Hall effect sensor 312 detects a magnetic force of a small magnet placed in the moveable barrier (not shown). When the moveable barrier moves between the access position and the restricted position, the Hall effect sensor detects the presence or absence of the magnet, providing feedback on the moveable barrier's position. Unlike the example embodiment of Fig. 1, in this example embodiment there is no input device shown. Hence, data communication is wireless as previously described.

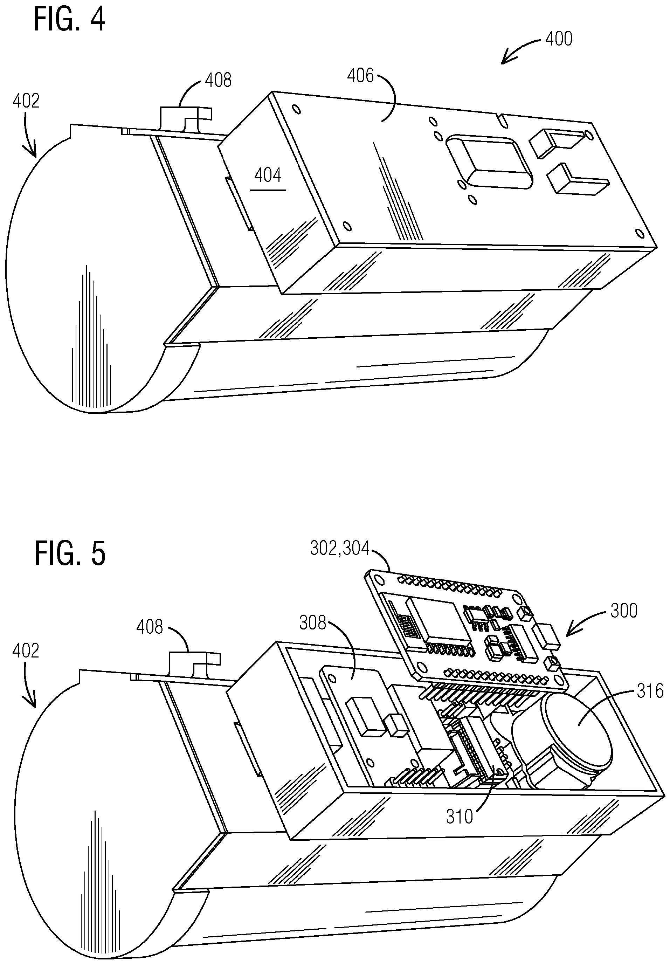

FIG. 4 is a perspective view of an example embodiment of the food access control device 400, including a movable barrier housing 402 and a controller housing 404 with a controller housing cover 406. Also shown are housing hooks 408 configured to secure the food access control device 400 to the cage's preexisting food hopper in an example embodiment, which is not meant to be limiting.

FIG. 5 is a perspective view of food access control device 400 with the controller housing cover 406 removed to show the server food access control device 300 with the server controller 302, the real time clock module 308, the stepper motor board 310, and the positioning mechanism 316 (which can be a stepper motor). The stepper motor board 310, and the positioning mechanism 316 are shown in their respective installed positions. The server controller 302 and the real time clock module 308 are shown elevated from their respective installed positions inside the controller housing 404 for clarity.

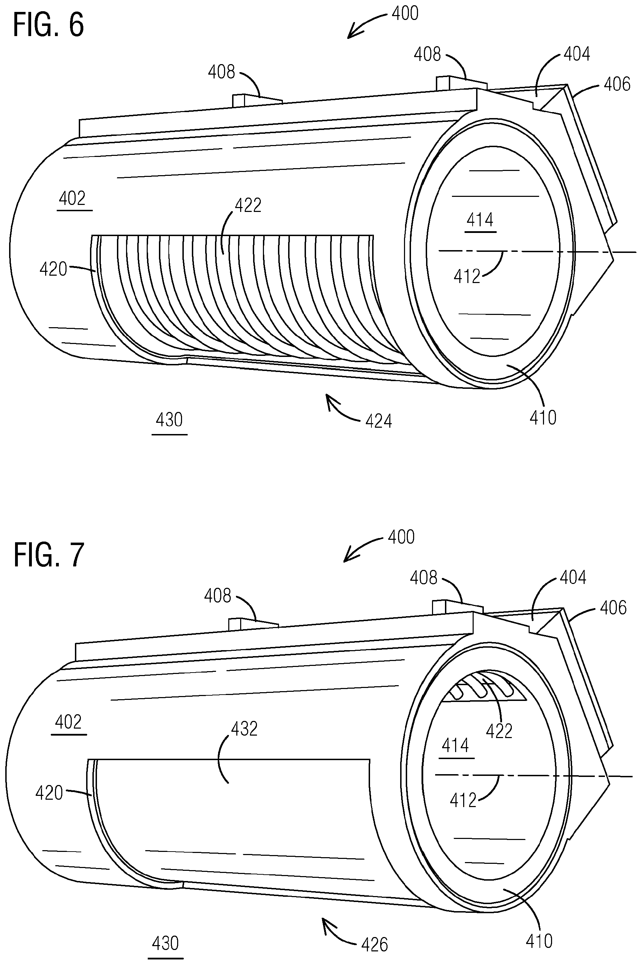

FIG. 6 is a perspective view of the food access control device 400 with an end cap removed to reveal the movable barrier 410. In this example embodiment, the movable barrier 410 is cylindrical in shape and is configured to rotate about a longitudinal axis 412 of the cylinder. The storage area 414 is disposed within the movable barrier 410. The movable barrier housing 402 has a housing opening 420 that aligns with a moveable barrier opening 422 in the movable barrier 410 when the movable barrier 410 is in the in the access position 424 as shown in FIG. 6. The living area 430 is outside of the movable barrier housing 402 in the cage. Accordingly, when in the access position 424 shown, access is provided between the living area 430 and the storage area 414 in which food may be disposed.

FIG. 7 is a perspective view of the food access control device of Fig. 4 with the movable barrier in a restricted position 426. To reach the restricted position 426, the server food access control device 300 has rotated the movable barrier 410 about the longitudinal axis 412 from the access position 424 to the restricted position 426 shown. The moveable barrier opening 422 is moved out of alignment with the housing opening 420 and a solid portion 432 of the movable barrier 410 is moved into alignment with the housing opening 420. The solid portion 432 blocks access between the living area 430 and the storage area 414 when the movable barrier 410 is in the restricted position 426.

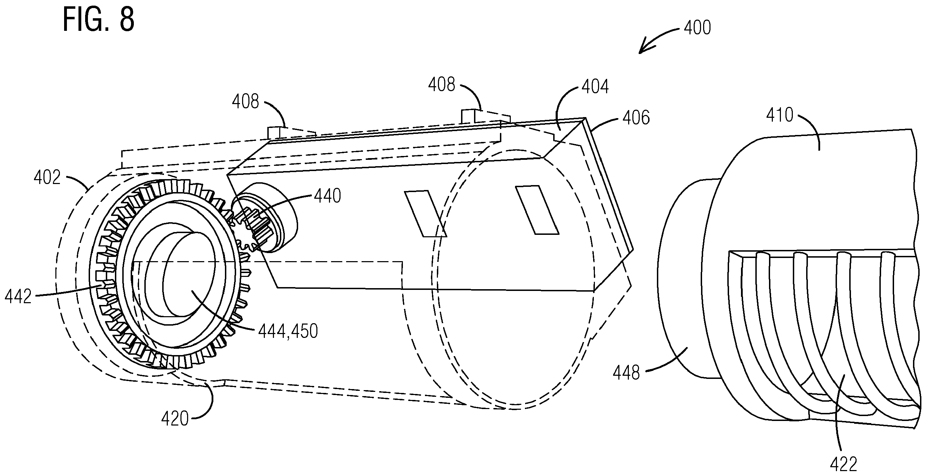

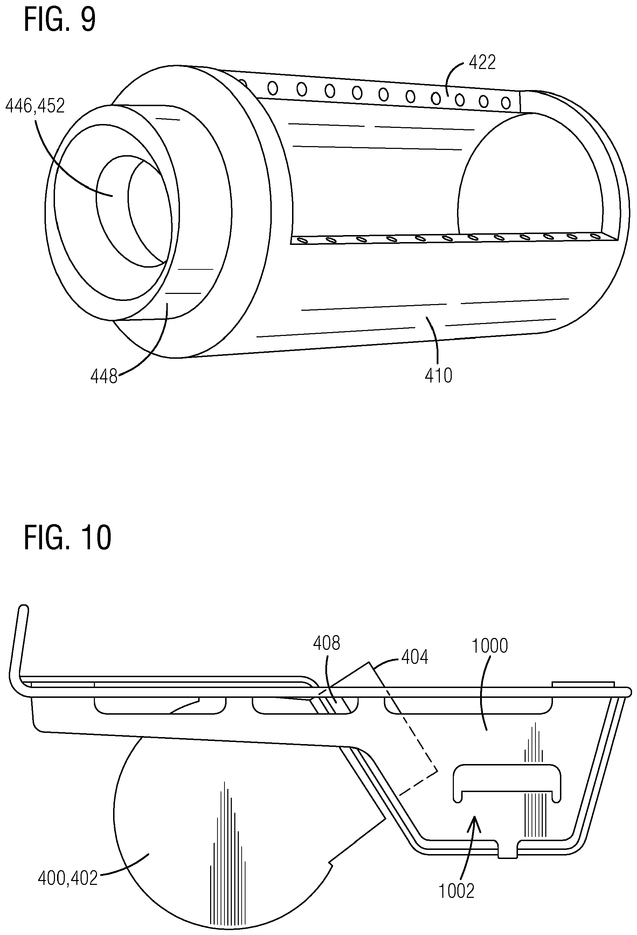

FIG. 8 is an exploded view of the food access control device 400 in which the movable barrier housing 402 is shown in phantom for sake of clarity. To rotate the movable barrier 410, the positioning mechanism 316 / server (not visible in FIG. 8) rotates a motor gear 440 which engages and rotates a cage gear 442. The cage gear 442 is secured to the movable barrier 410 and thereby rotates the movable barrier 410 with the cage gear 442. In the example embodiment show, the cage gear 442 and the movable barrier 410 are geometrically interlocked via a first feature 444 on the cage gear 442 that engages with a second feature 446 (see FIG. 9) on a proximate end 448 of the movable barrier 410. In the example embodiment shown, the first feature 444 includes a male stud 450 with an oval cross section and the second feature 446 includes a female socket 452 with a matching oval cross section that receives therein the male stud 450 as can be seen in FIG.9.

FIG. 10 is a side view of the food access control device 400 secured to the cage's preexisting food hopper 1000. In this example embodiment, the movable barrier housing 402 is secured under the food hopper 1000. The controller housing 404 is secured in a pocket 1002 on the inside of the food hopper 1000. In this way, an operator will have access to the controller housing 404 and elements therein, while the movable barrier housing 402, the movable barrier 410, and the food are all under the food hopper 1000 and within the confines of the cage when the food hopper 1000 is in place.

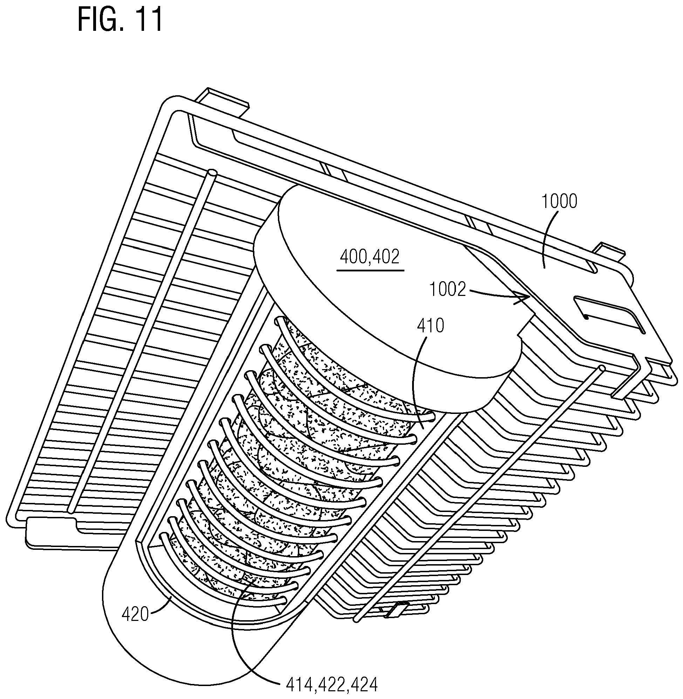

FIG. 11 is a bottom perspective view of the food access control device 400 secured to the cage's preexisting food hopper 1000 of FIG. 10. The movable barrier 410 is in the access position 424, so access would be provided between the living area 430 and the storage area 414, and hence to food disposed in the storage area 414.

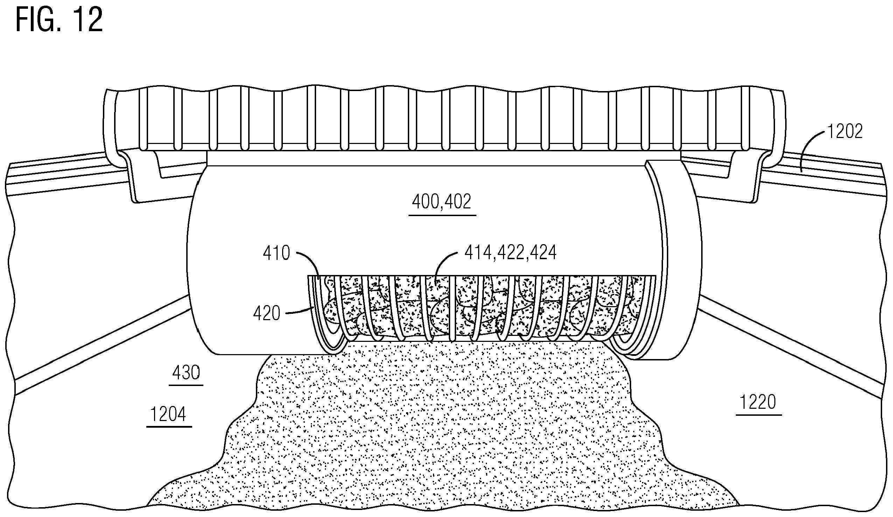

FIG. 12 is a front view of the food access control device 400 secured to the cage's preexisting food hopper 1000 that is, in turn, in position on the cage 1200. The food hopper 1000 rests on an upper edge 1202 of the cage 1200. The cage 1200 and the food hopper 1000 define a volume 1204 in the cage 1200 that is the living area 430. Accordingly, the movable barrier 410 provides access between the living area 430 and the food in the storage area 414 when the movable barrier 410 is in the access position 424 and restricts access when in the restricted position 426 (not shown).

The apparatus described herein provides several benefits. A first benefit is efficiency. Currently available alternatives use multiple cables to power superfluous home cage components or require setup using proprietary computers and software. Only a single micro USB cable is required to make the food access control device 100 fully functional. Each client food access control device 150 may receive its schedule data through a wireless connection to the server food access control device 120. This removes the need to individually adjust each client food access control device 150. The server schedule can be adjusted at any time via the input device 130 on the server food access control device 120 or by wirelessly connecting to the server food access control device 120 via a WiFi-capable device, such as a phone, tablet, or laptop (not included). One food access control device 100 is required per home cage 102 and any number of food access control devices 100 can be used simultaneously in the food access control apparatus.

A second benefit is simplicity. The food access control device's 100 simple design allows it to be easily swapped in and out of each home cage 102 without taking up additional cage space by utilizing the already occupied space of the empty food hopper. Unlike some currently available alternatives, the food access control device 100 is designed to be used in the original home cage, reducing anxiety and behavioral changes in study animals due to cage transfers. Most alternatives were designed for use with single-housed animals, but the food access control device 100 can be used with either single-housed or group-housed animals. The food access control device's 100 small design does not interfere with the vivarium's existing cage rack, unlike currently available alternatives, which require animals to be housed away from standard housing racks.

A third benefit is cost savings: The food access control device 100 is significantly less expensive than known competitive products. Competitive products additionally require that the home cage lid be replaced with a cage lid that exposes the animals to room air rather than the filtered air provided through standard housing home cage lids.

While various embodiments of the present invention have been shown and described herein, it will be obvious that such embodiments are provided by way of example only. Numerous variations, changes, and substitutions may be made without departing from the invention herein. Accordingly, it is intended that the invention be limited only by the scope of the appended claims.

## Claims

1. A food access control apparatus for home cages, the home cages comprising a food hopper, comprising:
at least two access control devices (100), each access control device (100) to be associated with his own home cage;
the at least two access control devices comprising:
a server access control device (120) to be associated with a server home cage (122), the server access control device (120) comprising a server controller (104, 140); and
at least one client access control device (150) to be associated with a client home cage (152), the client access control device (150) comprising a client controller (154) in a signal communication with the server controller (104, 140);
the server controller (104, 140) configured to deliver access signals according to an access schedule based on data entered into the server controller (104, 140) by an operator; and
the client controller (154) configured to receive an access schedule based on the data entered into the server controller (104, 140);
each of the at least two access control devices (100) further comprising: a movable barrier (108) configured to be positioned in the respective home cage (102) between a storage area (116) and a living area (114) and configured to be movable between an access position (112) where there is unrestricted access to an item in the storage area from the living area and a restricted position (110) where the access is denied;
wherein the movable barrier (108) is moved between the access position (112) and the restricted position (110) in response to the access signals, and
wherein the movable barrier (108) is configured to fit entirely within a volume bounded by the home cage (102) and the food hopper of the home cage (102); and/or to be suspended from the food hopper of the home cage (102).

2. The apparatus of claim 1, further comprising a housing inside which the movable barrier (108) is disposed, wherein the movable barrier (108) is configured to rotate between the access position (112) and the restricted position (110).

3. The apparatus of claim 2 wherein the storage area (116) is disposed inside the movable barrier (108), wherein in the access position (112) a housing opening in the housing and a movable barrier opening in the movable barrier (108) align to provide the unrestricted access, and in the restricted position (110) the housing opening and the movable barrier opening do not align.

4. The apparatus of any of claim 2-3, further comprising a servomotor or a stepper motor operatively connected to the movable barrier (108), in signal communication with the server controller (104, 140) or the client controller (154) of the home cage (102), and configured to move the movable barrier (108) between the access position (112) and the restricted position (110) in response to the access signals.

5. The apparatus of claim 4, wherein the servomotor or the stepper motor rotates the movable barrier between the access position (112) and the restricted position (110).

6. The apparatus of claim 1, wherein the movable barrier is configured to be suspended from the food hopper, and wherein the server controller (104, 140) or the client controller (154) (150) of the home cage (102) is disposed atop the food hopper.

7. The apparatus of any of claim 1-6, wherein the access schedule controls when the movable barrier (108) is moved to the access position (112) and a duration the movable barrier (108) remains in the access position (112).

8. The apparatus of any of claim 1-7, wherein the server access control device (100, 120) further comprising an input device in signal communication with the server controller (104, 140) and into which the operator enters the data.

9. The apparatus of any of claim 1-8, wherein the server controller (104) comprises a wireless controller.

10. The apparatus of any of claim 1-9, wherein data entered into the server controller (104, 140) is transmitted to the client controller (150, 154), or a copy of the access schedule of the server controller (104, 140) is transmitted to the client controller (150, 154) to be used as the access schedule of the client controller (150, 154) .

11. The apparatus of claim 10, wherein the apparatus is configured to keep the schedule in the client controller (150) synchronized with the schedule in the server controller (104, 140).

12. The apparatus of any of claim 10-11, wherein the server controller (104, 140) comprises a wireless controller and the client controller (150) comprises a wireless controller, and wherein the signal communication comprises wireless signal communication.

13. The apparatus of any of claim 10-12, wherein the server controller (104, 140) comprises a server controller time clock, wherein the client controller (150) comprises a client controller time clock, and wherein the apparatus is configured to synchronize the client controller time clock with the server controller time clock.

14. The apparatus of claim 13, wherein the server controller (104, 140) comprises a battery backup configured to supply power to the server controller time clock during a loss of external power.

## Patentansprüche

1. Futterzugangssteuerungseinrichtung für Heimkäfige, wobei die Heimkäfige einen Futtertrichter umfassen, umfassend:
mindestens zwei Zugangssteuerungsvorrichtungen (100), wobei jede Zugangssteuerungsvorrichtung (100) ihrem eigenen Heimkäfig zuzuordnen ist;
wobei die mindestens zwei Zugangssteuerungsvorrichtungen umfassen:
eine Server-Zugangssteuerungsvorrichtung (120), die einem Server-Heimkäfig (122) zuzuordnen ist, wobei die Server-Zugangssteuerungsvorrichtung (120) eine Server-Steuereinheit (104, 140) umfasst; und
mindestens eine Client-Zugangssteuerungsvorrichtung (150), die einem Client-Heimkäfig (152) zuzuordnen ist, wobei die Client-Zugangssteuerungsvorrichtung (150) eine Client-Steuereinheit (154) umfasst, die mit der Server-Steuereinheit (104, 140) in einer Signalkommunikation steht;
wobei die Server-Steuereinheit (104, 140) so konfiguriert ist, dass sie gemäß einem Zugangsplan auf Basis von Daten, die von einem Bediener in die Server-Steuereinheit (104, 140) eingegeben werden, Zugangssignale liefert; und
wobei die Client-Steuereinheit (154) so konfiguriert ist, dass sie einen Zugangsplan auf Basis der in die Server-Steuereinheit (104, 140) eingegebenen Daten empfängt;
wobei jede der mindestens zwei Zugangssteuerungsvorrichtungen (100) weiter umfasst: Eine bewegliche Schranke (108), die so konfiguriert ist, dass sie in dem jeweiligen Heimkäfig (102) zwischen einem Lagerbereich (116) und einem Aufenthaltsbereich (114) positioniert werden kann und so konfiguriert ist, dass sie zwischen einer Zugangsposition (112), in der uneingeschränkter Zugang zu einem Objekt im Lagerbereich vom Aufenthaltsbereich aus besteht, und einer eingeschränkten Position (110), in der der Zugang verwehrt wird, beweglich ist;
wobei die bewegliche Schranke (108) in Reaktion auf die Zugangssignale zwischen der Zugangsposition (112) und der eingeschränkten Position (110) bewegt wird, und
wobei die bewegliche Schranke (108) so konfiguriert ist, dass sie vollständig in ein Volumen passt, das durch den Heimkäfig (102) und den Futtertrichter des Heimkäfigs (102) begrenzt wird; und/oder am Futtertrichter des Heimkäfigs (102) aufgehängt werden kann.

2. Einrichtung nach Anspruch 1, die weiter ein Gehäuse umfasst, in dem die bewegliche Schranke (108) angeordnet ist, wobei die bewegliche Schranke (108) so konfiguriert ist, dass sie sich zwischen der Zugangsposition (112) und der eingeschränkten Position (110) dreht.

3. Einrichtung nach Anspruch 2, wobei der Lagerbereich (116) innerhalb der beweglichen Schranke (108) angeordnet ist, wobei in der Zugangsposition (112) eine Gehäuseöffnung im Gehäuse und eine Öffnung der beweglichen Schranke in der beweglichen Schranke (108) fluchten, um den uneingeschränkten Zugang bereitzustellen, und in der eingeschränkten Position (110) die Gehäuseöffnung und die Öffnung der beweglichen Schranke nicht fluchten.

4. Einrichtung nach einem der Ansprüche 2-3, die weiter einen Servomotor oder einen Schrittmotor umfasst, der mit der beweglichen Schranke (108) wirkverbunden ist, mit der Server-Steuereinheit (104, 140) oder der Client-Steuereinheit (154) des Heimkäfigs (102) in Signalkommunikation steht und so konfiguriert ist, dass er die bewegliche Schranke (108) in Reaktion auf die Zugangssignale zwischen der Zugangsposition (112) und der eingeschränkten Position (110) bewegt.

5. Einrichtung nach Anspruch 4, wobei der Servomotor oder der Schrittmotor die bewegliche Schranke zwischen der Zugangsposition (112) und der eingeschränkten Position (110) dreht.

6. Einrichtung nach Anspruch 1, wobei die bewegliche Schranke so konfiguriert ist, dass sie am Futtertrichter aufgehängt werden kann, und wobei die Server-Steuereinheit (104, 140) oder die Client-Steuereinheit (154) des Heimkäfigs (102) über dem Futtertrichter angeordnet ist.

7. Einrichtung nach einem von Anspruch 1-6, wobei der Zugangsplan steuert, wann die bewegliche Schranke (108) in die Zugangsposition (112) bewegt wird und wie lange die bewegliche Schranke (108) in der Zugangsposition (112) verbleibt.

8. Einrichtung nach einem von Anspruch 1-7, wobei die Server-Zugangssteuerungsvorrichtung (100, 120) weiter eine Eingabevorrichtung umfasst, die mit der Server-Steuereinheit (104, 140) in Signalkommunikation steht und in die der Bediener die Daten eingibt.

9. Einrichtung nach einem der Ansprüche 1-8, wobei die Server-Steuereinheit (104) eine drahtlose Steuereinheit umfasst.

10. Einrichtung nach einem der Ansprüche 1-9, wobei Daten, die in die Server-Steuereinheit (104, 140) eingegeben werden, an die Client-Steuereinheit (150, 154) übertragen werden, oder eine Kopie des Zugangsplans der Server-Steuereinheit (104, 140) an die Client-Steuereinheit (150, 154) übertragen wird, um als Zugangsplan der Client-Steuereinheit (150, 154) verwendet zu werden.

11. Einrichtung nach Anspruch 10, wobei die Einrichtung so konfiguriert ist, dass sie den Plan in der Client-Steuereinheit (150) mit dem Plan in der Server-Steuereinheit (104, 140) synchronisiert hält.

12. Einrichtung nach einem der Ansprüche 10-11, wobei die Server-Steuereinheit (104, 140) eine drahtlose Steuereinheit umfasst und die Client-Steuereinheit (150) eine drahtlose Steuereinheit umfasst, und wobei die Signalkommunikation drahtlose Signalkommunikation umfasst.

13. Einrichtung nach einem von Anspruch 10-12, wobei die Server-Steuereinheit (104, 140) eine Zeituhr der Server-Steuereinheit umfasst, wobei die Client-Steuereinheit (150) eine Zeituhr der Client-Steuereinheit umfasst, und wobei die Einrichtung so konfiguriert ist, dass sie die Zeituhr der Client-Steuereinheit mit der Zeituhr der Server-Steuereinheit synchronisiert.

14. Einrichtung nach Anspruch 13, wobei die Server-Steuereinheit (104, 140) eine Batteriesicherung umfasst, die so konfiguriert ist, dass sie die Zeituhr der Server-Steuereinheit bei einem Ausfall der externen Stromversorgung mit Strom versorgt.

## Revendications

1. Appareil de commande d'accès à la nourriture pour cages domestiques, les cages domestiques comprenant une trémie à nourriture, comprenant :
au moins deux dispositifs de commande d'accès (100), chaque dispositif de commande d'accès (100) devant être associé à sa propre cage domestique ;
les au moins deux dispositifs de commande d'accès comprenant :
un dispositif de commande d'accès serveur (120) à associer à une cage domestique de serveur (122), le dispositif de commande d'accès serveur (120) comprenant un dispositif de commande serveur (104, 140) ; et
au moins un dispositif de commande d'accès client (150) à associer à une cage domestique de client (152), le dispositif de commande d'accès client (150) comprenant un dispositif de commande client (154) en communication de signal avec le dispositif de commande serveur (104, 140) ;
le dispositif de commande serveur (104, 140) configuré pour délivrer des signaux d'accès selon un calendrier d'accès basé sur des données saisies dans le dispositif de commande serveur (104, 140) par un opérateur ; et
le dispositif de commande client (154) configuré pour recevoir un calendrier d'accès basé sur les données saisies dans le dispositif de commande serveur (104, 140) ;
chacun des au moins deux dispositifs de commande d'accès (100) comprenant en outre : une barrière mobile (108) configurée pour être positionnée dans la cage domestique (102) respective entre une zone de stockage (116) et une zone de vie (114) et configurée pour être mobile entre une position d'accès (112) où il existe un accès illimité à un article dans la zone de stockage depuis la zone de vie et une position restreinte (110) où l'accès est refusé ;
dans lequel la barrière mobile (108) est déplacée entre la position d'accès (112) et la position restreinte (110) en réponse aux signaux d'accès, et
dans lequel la barrière mobile (108) est configurée pour s'adapter entièrement à un volume délimité par la cage domestique (102) et la trémie à nourriture de la cage domestique (102) ; et/ou pour être suspendue à la trémie à nourriture de la cage domestique (102).

2. Appareil selon la revendication 1, comprenant en outre un boîtier à l'intérieur duquel la barrière mobile (108) est disposée, dans lequel la barrière mobile (108) est configurée pour tourner entre la position d'accès (112) et la position restreinte (110).

3. Appareil selon la revendication 2, dans lequel la zone de stockage (116) est disposée à l'intérieur de la barrière mobile (108), dans lequel, dans la position d'accès (112), une ouverture de boîtier dans le boîtier et une ouverture de barrière mobile dans la barrière mobile (108) s'alignent pour permettre l'accès illimité, et dans la position restreinte (110), l'ouverture de boîtier et l'ouverture de barrière mobile ne s'alignent pas.

4. Appareil selon l'une quelconque des revendications 2-3, comprenant en outre un servomoteur ou un moteur pas à pas relié de manière opérationnelle à la barrière mobile (108), en communication de signal avec le dispositif de commande serveur (104, 140) ou le dispositif de commande client (154) de la cage domestique (102), et configuré pour déplacer la barrière mobile (108) entre la position d'accès (112) et la position restreinte (110) en réponse aux signaux d'accès.

5. Appareil selon la revendication 4, dans lequel le servomoteur ou le moteur pas à pas fait tourner la barrière mobile entre la position d'accès (112) et la position restreinte (110).

6. Appareil selon la revendication 1, dans lequel la barrière mobile est configurée pour être suspendue à la trémie à nourriture, et dans lequel le dispositif de commande serveur (104, 140) ou le dispositif de commande client (154) de la cage domestique (102) est disposé au-dessus de la trémie à nourriture.

7. Appareil selon l'une quelconque des revendications 1-6, dans lequel le calendrier d'accès commande le moment où la barrière mobile (108) est déplacée vers la position d'accès (112) et la durée pendant laquelle la barrière mobile (108) reste dans la position d'accès (112).

8. Appareil selon l'une quelconque des revendications 1-7, dans lequel le dispositif de commande d'accès serveur (100, 120) comprend en outre un dispositif d'entrée en communication de signal avec le dispositif de commande serveur (104, 140) et dans lequel l'opérateur saisit les données.

9. Appareil selon l'une quelconque des revendications 1-8, dans lequel le dispositif de commande serveur (104) comprend un dispositif de commande sans fil.

10. Appareil selon l'une quelconque des revendications 1-9, dans lequel les données saisies dans le dispositif de commande serveur (104, 140) sont transmises au dispositif de commande client (150, 154), ou une copie du calendrier d'accès du dispositif de commande serveur (104, 140) est transmise au dispositif de commande client (150, 154) pour être utilisée comme calendrier d'accès du dispositif de commande client (150, 154).

11. Appareil selon la revendication 10, dans lequel l'appareil est configuré pour maintenir le calendrier dans le dispositif de commande client (150) synchronisé avec le calendrier dans le dispositif de commande serveur (104, 140).

12. Appareil selon l'une quelconque des revendications 10-11, dans lequel le dispositif de commande serveur (104, 140) comprend un dispositif de commande sans fil et le dispositif de commande client (150) comprend un dispositif de commande sans fil, et dans lequel la communication de signal comprend une communication de signal sans fil.

13. Appareil selon l'une quelconque des revendications 10-12, dans lequel le dispositif de commande serveur (104, 140) comprend une horloge temporelle de dispositif de commande serveur, dans lequel le dispositif de commande client (150) comprend une horloge temporelle de dispositif de commande client, et dans lequel l'appareil est configuré pour synchroniser l'horloge temporelle de dispositif de commande client avec l'horloge temporelle de dispositif de commande serveur.

14. Appareil selon la revendication 13, dans lequel le dispositif de commande serveur (104, 140) comprend une batterie de secours configurée pour alimenter l'horloge temporelle de dispositif de commande serveur pendant une perte d'alimentation externe.
